(19)

**Europäisches Patentamt**
**European Patent Office**
**Office européen des brevets**

(11) **EP 4 700 849 A2**

(12) # EUROPEAN PATENT APPLICATION

(43) Date of publication:
**25.02.2026 Bulletin 2026/09**

(21) Application number: **25210465.8**

(22) Date of filing: **22.10.2025**

(51) International Patent Classification (IPC):
$H01M\ 4/133^{(2010.01)}$    $H01M\ 4/134^{(2010.01)}$
$H01M\ 4/1393^{(2010.01)}$    $H01M\ 4/1395^{(2010.01)}$
$H01M\ 4/38^{(2006.01)}$    $H01M\ 4/587^{(2010.01)}$
$H01M\ 4/62^{(2006.01)}$    $H01M\ 10/0525^{(2010.01)}$

(52) Cooperative Patent Classification (CPC):
Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **07.01.2025 CN 202510040372**

(71) Applicant: **BTR New Material Group Co., Ltd.
Shenzhen, Guangdong 518106 (CN)**

(72) Inventors:
• **HE, Peng**
  **Shenzhen, 518106 (CN)**

• **XIONG, Jiangzhi**
  **Shenzhen, 518106 (CN)**
• **XIAO, Chengmao**
  **Shenzhen, 518106 (CN)**
• **REN, Jianguo**
  **Shenzhen, 518106 (CN)**
• **HUANG, Youyuan**
  **Shenzhen, 518106 (CN)**
• **HE, Xueqin**
  **Shenzhen, 518106 (CN)**

(74) Representative: **Michalski Hüttermann & Partner
Patentanwälte mbB
Kaistraße 16A
40221 Düsseldorf (DE)**

(54) **ANODE MATERIAL, ANODE SHEET AND SECONDARY BATTERY**

(57) Disclosed are an anode material, an anode sheet, and a secondary battery. The anode material contains nitrogen, a carbon matrix and an active substance. The carbon matrix has pores, into which at least part of the active substance is disposed, a region having a depth of less than or equal to 200 nm from an outer surface of the anode material is defined as a first region, a region having a depth of greater than or equal to 1000 nm from the outer surface of the anode material is defined as a second region, the first region contains $\alpha$ atomic percent of nitrogen, and the second region contains $\beta$ atomic percent of nitrogen, where $\alpha < \beta$; a deposition parameter of the active substance is defined as $\gamma$, and $\gamma \geq 0.86$. In the anode material, a relatively large part of the active substance is distributed in the pores of the carbon matrix, which reduces gas production of the anode material, and facilitates the conductive performance of the carbon matrix, so that a secondary battery using the anode material has higher specific discharge capacity and initial coulombic efficiency, and better cycle stability.

**FIG. 1**

EP 4 700 849 A2

**Description**

**TECHNICAL FIELD**

The present application relates to the field of electrochemical energy storage, and specifically relates to an anode material, an anode sheet, and a secondary battery.

**BACKGROUND OF THE INVENTION**

With the rapid development and wide application of electric automobiles, the market puts higher demands on the energy density and cycle life of secondary batteries (such as lithium-ion batteries). The energy density of the lithium-ion battery mainly depends on the selection of electrode materials, and conventional mainstream anode materials mainly includes graphite. However, the specific capacity of a graphite anode is close to the theoretical upper limit, and further improvement is difficult. In addition to a theoretical capacity of about 4200 mAh/g, silicon further has the advantages of high capacity, wide source, environmental friendliness, proper lithium intercalation potential and the like, and therefore is generally considered as one of the next-generation high-specific-energy candidate cathode materials for lithium-ion batteries.

However, silicon has a volume significantly expanded during lithium intercalation, which tends to cause breakage and pulverization of silicon particles, thereby causing damage to the electrode structure or problems such as repeated growth of a solid electrolyte interface (SEI) film, and the like, resulting in rapid degradation of electrochemical properties of a silicon anode.

**SUMMARY OF THE INVENTION**

The present application provides an anode material to solve at least one of the above problems. The invention is defined by the features of the independent claims.

To achieve the above object, the present application provides an anode material containing nitrogen, a carbon matrix and an active substance, the carbon matrix has pores, into which at least part of the active substance is disposed, a region having a depth of less than or equal to 200 nm from an outer surface of the anode material is defined as a first region, a region having a depth of greater than or equal to 1000 nm from the outer surface of the anode material is defined as a second region, the first region contains $\alpha$% atomic percent of nitrogen, and the second region contains $\beta$% atomic percent

of nitrogen, where $\alpha < \beta$; a deposition parameter of the active substance is defined as $\gamma$, and $\gamma = \frac{m_2 \times p_2 - m_1 \times p_1}{(m_1 \times a_1 - m_2 \times a_2)/\rho}$, $\gamma \geq 0.86$; where $\rho$ is a theoretical density of the active substance; a mass percent of the active substance in the anode material is $a_1$, and a specific pore volume of the anode material is $p_1$; and after placing the anode material with a mass of $m_1$ into a sufficient amount of acid solution, stirring it, washing and drying it, a mass of the remaining material is measured as $m_2$, a mass percent of the active substance in the remaining material is $a_2$, and a specific pore volume of the remaining material is $p_2$.

The present application further provides an anode sheet, including an anode current collector and an anode active material layer on the anode current collector, where the anode active material layer includes the anode material as described above.

The present application further provides a secondary battery, including the anode sheet as described above.

The present application has found in studies that when the anode material contains nitrogen, nitrogen atoms may cause changes in the local surface chemical activity of the carbon matrix, which may affect the contact between the carbon matrix and other substances. The present application has further found that when the anode material is divided into the first region and the second region, the second region is closer to an interior of the carbon matrix than the first region, and more nitrogen in the anode material is distributed in the interior of the carbon matrix instead of the surface layer. Taking vapor-deposited active substances as an example, such a distribution is conducive to promoting the decomposition and deposition of more gas-phase active substance sources (e.g., gas-phase silanes) into the pores of the carbon matrix, thereby helping to increase the amount of active substance deposited into the pores of the carbon matrix, so that the deposition parameter $\gamma$ of the active substance is greater than or equal to 0.86, and a proportion of the active substance distributed on the surface of the carbon matrix is reduced. As a result, side reaction between the anode material and the liquid electrolyte is reduced, which further reduces gas production of the anode material. In addition, the distribution of nitrogen in the carbon matrix is conducive to the exertion of the conductive performance of the carbon matrix. A secondary battery including the anode material of the present application can have higher specific discharge capacity and initial coulombic efficiency, and better cycle stability.

## BRIEF DESCRIPTION OF THE DRAWINGS

FIG. 1 is a schematic structural diagram showing a secondary battery according to an embodiment of the present application during charging.
FIG. 2 is a schematic structural diagram showing a secondary battery according to an embodiment of the present application during discharge.
FIG. 3 is a morphology test image of an anode material provided in example 1 of the present application.
FIG. 4 is an XRD test pattern of the anode material provided in example 1 of the present application.
FIG. 5 is a schematic diagram of the target area in the test for the mass proportion of the coating layer according to the embodiment of the present application.

Reference signs of main elements:

| | |
|---|---|
| electrode assembly | 100; |
| cathode sheet | 101; |
| anode sheet | 102; and |
| isolation film | 103. |

## DETAIL DESCRIPTION OF THE INVENTION

Examples of the present application will be described in detail below. The examples described below with reference to the drawings are merely illustrative, and are used only for the purpose of explaining the present application and should not be interpreted as limitations to the present application. It should be noted that unless otherwise defined, all technical and scientific terms used herein have the same meaning as commonly understood by one of ordinary skill in the art of the present application. The embodiments of the present application and features thereof may be combined with each other without conflict. In the following detailed description, numerous specific details are set forth to provide a thorough understanding of the present application. However, the embodiments described are merely some, but not all, of the embodiments of the present application.

To solve the problems caused by expansion of silicon particles in a silicon anode material, innovations in silicon-carbon anode materials have emerged in the field of lithium-ion batteries, which combine the high specific capacity of silicon with the stability of carbon, and aim to improve the energy density and cycle life of batteries. To further utilize the advantages of silicon-carbon anode materials and increase the capacity of a silicon-carbon anode, the present application seeks to improve the loading of silicon from the structural design. The present application has found that during compounding of silicon material and carbon material, a large amount of silicon material tends to be exposed on the surface of the carbon material, causing a huge volume effect in the silicon-carbon anode material during lithium intercalation and thereby affecting the conductivity of the entire anode material; and the exposed silicon material in the aqueous homogenate or liquid electrolyte system may have obvious gas production behavior, which poses potential safety hazards while limiting the capacity of the silicon-carbon anode material, resulting in a reduced initial coulombic efficiency of the secondary battery including the silicon-carbon anode material.

On this basis, the present application improves the preparation method for the silicon-carbon anode material by reducing the amount of silicon material exposed on the surface of the carbon material under the same silicon deposition amount, thereby achieving the purpose of improving the capacity, initial coulombic efficiency, and cycle stability of the silicon-carbon anode material.

On this basis, an embodiment of the present application provides a secondary battery, including a housing, an electrode assembly, and an electrolyte. The electrode assembly and the liquid electrolyte are both disposed in the housing.

The housing may be a package obtained by encapsulation using an encapsulation film (e.g., an aluminum-plastic film), such as the case of a pouch battery. In other examples, the battery may be a steel-cased battery, an aluminum-cased battery, or the like.

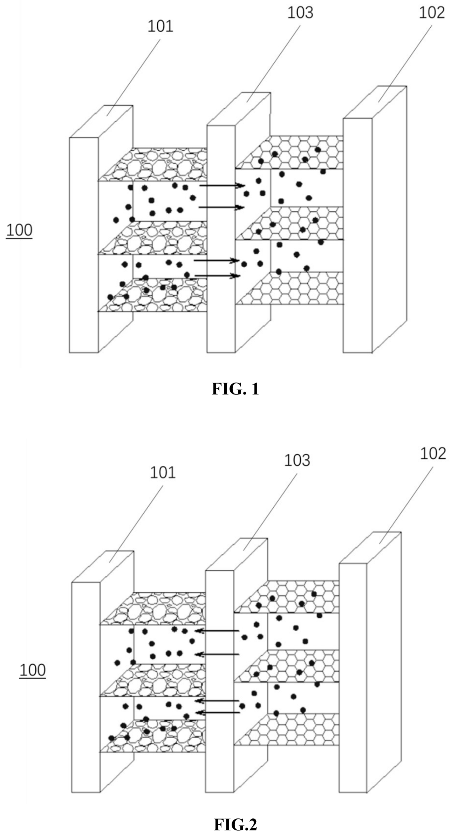

Referring to FIGs. 1 and 2, the electrode assembly 100 includes a cathode sheet 101, an anode sheet 102, and an isolation film 103 between the cathode sheet 101 and the anode sheet 102. When a liquid electrolyte (not shown) is provided, the situation during charging may refer to FIG. 1, where active ions (e.g., lithium ions) are deintercalated from lattices of a cathode material (e.g., lithiated intercalation compound) of the cathode sheet 101, pass through the isolation film 103 through the liquid electrolyte, and then reach the anode sheet 102 before being inserted into lattices of an anode material. The situation during discharge may refer to FIG. 2, where active ions (e.g., lithium ions) are deintercalated from lattices of the anode material of the anode sheet 102, pass through the isolation film 103 through the liquid electrolyte, and reach the cathode sheet 101 before being intercalated into the lattices of the cathode material (e.g., lithiated intercalation compound), thereby generating electrons moving from the anode sheet 102 to the cathode sheet 101 through an external circuit. Reverse movement of the electrons forms current that may be used by an electrical appliance.

In some examples, the electrode assembly 100 may have a stacked structure formed by the cathode sheet 101, the isolation film 103, and the anode sheet 102 sequentially stacked. In other examples, the electrode assembly 100 may have a coiled structure formed by the cathode sheet 101, the isolation film 103, and the anode sheet 102 sequentially stacked and coiled.

**Cathode Sheet**

The cathode sheet 101 includes a cathode current collector and a cathode material active layer on at least one surface of the cathode current collector. The cathode current collector may use an aluminum foil or a nickel foil or the like, or may be any composite current collector disclosed in the existing art, for example, but not limited to, a current collector formed by combining the conductive foil described above and a polymer substrate. The cathode material active layer includes a cathode active material including a compound that enables reversible intercalation and deintercalation of lithium icons (i.e., a lithiated intercalation compound). In some examples, the cathode active material may include a lithium transition metal composite oxide. The lithium transition metal composite oxide contains lithium and at least one element selected from cobalt, manganese, or nickel. In some examples, the cathode active material may include, but is not limited to, at least one of $LiCoO_2$, NCM, $LiMn_2O_4$, $LiNi_{0.5}Mn_{1.5}O_4$ or $LiFePO_4$.

The cathode material active layer further includes a binder for binding cathode active material particles to facilitate formation of a film layer, while improving the bonding between the cathode material active layer and the cathode current collector. In some examples, the binder may include, but is not limited to, at least one of polyvinyl alcohol, hydroxypropyl cellulose, diacetyl cellulose, polyvinyl chloride, carboxylated polyvinyl chloride, polyvinyl fluoride, ethylene oxide-containing polymers, polyvinyl pyrrolidone, polyurethane, polytetrafluoroethylene, polyvinylidene fluoride, polyethylene, polypropylene, styrene-butadiene rubber, acrylated styrene-butadiene rubber, epoxy resin, or nylon.

The cathode material active layer may further include a conductive material including, but not limited to, a carbon-based material, a metal-based material, a conductive polymer, or any combination thereof. In some examples, the carbon-based material may include, but is not limited to, natural graphite, artificial graphite, carbon black, acetylene black, Ketjen black, carbon fibers, or any combination thereof. In some examples, the metal-based material may include, but is not limited to, metal powder or metal fibers, such as copper, nickel, aluminum, or silver. In some examples, the conductive polymer may be a polyphenylene derivative.

**Anode Sheet**

The anode sheet 102 includes an anode current collector and an anode material active layer on at least one surface of the anode current collector. The anode current collector may use at least one of a copper foil, a nickel foil, a stainless-steel foil, a titanium foil, or a carbon-based current collector, or the like, or may be any composite current collector disclosed in the existing art, for example, but not limited to, a current collector formed by combining the conductive foil described above and a polymer substrate.

The anode material active layer includes an anode material containing nitrogen. The anode material includes a carbon matrix and an active substance. The carbon matrix has pores, into which at least part of the active substance is disposed, a region having a depth of less than or equal to 200 nm from an outer surface of the anode material is defined as a first region, a region having a depth of greater than or equal to 1000 nm from the outer surface of the anode material is defined as a second region, the first region contains $\alpha$% atomic percent of nitrogen, and the second region contains $\beta$% atomic percent of nitrogen, where $\alpha < \beta$.

A deposition parameter of the active substance is defined as y, $\gamma = \dfrac{m_2 \times p_2 - m_1 \times p_1}{(m_1 \times a_1 - m_2 \times a_2)/\rho}$ , $\gamma \geq 0.86$, where $\rho$ is a density of the active substance; a mass percent of the active substance in the anode material is $a_1$, and a specific pore volume of the anode material is $p_1$; and after placing the anode material with a mass of $m_1$ into a sufficient amount of acid solution, stirring it, washing and drying it, a mass of the remaining material is measured as $m_2$, a mass percent of the active substance in the remaining material is $a_2$, and a specific pore volume of the remaining material is $p_2$.

Specifically, y may be 0.86, 0.87, 0.88, 0.89, 0.90, 0.92, 0.94, 0.97, 0.98, 0.99, or any value within a range limited by any two of the above values.

The present application has found in studies that when the anode material contains nitrogen, nitrogen atoms may cause changes in local surface chemical activity of the carbon matrix, which may affect the contact between the carbon matrix and other substances. The present application has further found that when the anode material is divided into the first region and the second region, the second region is closer to an interior of the carbon matrix than the first region, and more nitrogen is distributed in the interior of the carbon matrix instead of the surface layer. Taking a vapor deposited active substance as an example, such a distribution may facilitate decomposition and deposition of more gas-phase active substance sources (e.g., gas-phase silanes) into the pores of the carbon matrix, which can help to increase the amount of active substance deposited into the pores of the carbon matrix, so that the deposition parameter $\gamma$ of the active substance is greater than or equal to 0.86, and a proportion of the active substance distributed on the surface of the carbon matrix is reduced. As a result, side reaction between the anode material and the liquid electrolyte is reduced, which further reduces gas production of the anode material, and the distribution of nitrogen in the carbon matrix is conducive to the exertion of the conductive performance of the carbon matrix. A secondary battery including the anode material of the present application has higher specific discharge capacity and initial coulombic efficiency, and better cycle stability.

It will be appreciated that when $\alpha > \beta$, the nitrogen atoms are distributed in a more superficial region of the carbon matrix, and a relatively small content of nitrogen atoms are distributed in the interior of the carbon matrix, so that the nitrogen atoms play a weaker role in enhancing the adsorption capacity of the pores of the carbon matrix for the active substance, and the active substance tends to be deposited on the surface of the carbon matrix, resulting in increased side reaction between the anode material and water or liquid electrolyte, and increased gas production of the anode material, which may limit the capacity of the secondary battery and lead to decreased initial coulombic efficiency and cycle stability of the secondary battery.

In the above calculation equation for $\gamma$, the polynomial $m_2 \times p_2 - m_1 \times p_1$ represents a difference between a pore volume of the remaining material with a mass of $m_2$ and a pore volume of the anode material with a mass of $m_1$, characterizing a volume of the active substance in the pores of the carbon matrix in the anode material with a mass of $m_1$ of the present application; the polynomial $m_1 \times a_1 - m_2 \times a_2$ represents a difference between a mass of the active substance in the anode material with a mass of $m_1$ and a mass of the active substance in the remaining material with a mass of $m_2$ in the present application, characterizing a total mass of the active substance removed from the anode material with a mass of $m_1$ by an acid solution etching (including all the active substance in the pores and at other locations of the carbon matrix) in the present application, and a ratio of the polynomial $m_1 \times a_1 - m_2 \times a_2$ to the density $\rho$ of the active substance correspondingly characterizes a total volume of the active substance etched away from the anode material with a mass of $m_1$ by the acid solution in the present application. Accordingly, the calculation equation for $\gamma$ is used to characterize a proportion of the active substance in the pores of the carbon matrix in the anode material to the total active substance.

In some examples, removing the active substance from the anode material includes: mixing the anode material with an acid solution. The anode material is mixed with an acid solution of a sufficient concentration, stirred sufficiently, and etched with the acid solution, which can remove, to a certain extent, the active substance in the pores and on the surface of the carbon matrix of the anode material Then, the etched anode material is cleaned and dried, thereby completing removal of the active substance.

In some examples, the acid solution includes one or more of hydrochloric acid, nitric acid, or hydrofluoric acid.

In some examples, taking a silicon material as an example of the active substance in the anode material, then "removing the active substance from the anode material" includes: preparing an acid solution with hydrochloric acid at a concentration of 70% and hydrofluoric acid at a concentration of 50% at a ratio of 2:1 by volume, placing the anode material into the acid solution and stirring for at least 10 hours, and then washing and drying the anode material. In the calculation equation for $\gamma$, $\rho$ may take the theoretical density value of the silicon material, which is 2.34, based on which the deposition parameter $\gamma$ of the silicon material is calculated, which may further characterize a proportion of silicon material deposited into the pores of the carbon matrix.

In the existing art, taking a silicon material as an example for the active substance, when the content of the silicon material reaches a certain level, part of the silicon material will begin to be attached to a surface of the carbon matrix, thereby significantly increasing the specific surface area of the anode material, resulting in increased contact and side reaction between the anode material and the liquid electrolyte during charging and discharge, and making it more difficult to maintain a stable SEI film. Moreover, silicon particles attached to the surface of the carbon matrix tend to be hydrolyzed to produce a large amount of gas during slurry preparation and battery use, leading to reduced stability of the slurry as well as potential safety hazards of the battery. Furthermore, given a certain content of the silicon material in the anode material, a higher content of the silicon material on the surface of the carbon matrix implies a lower content of the silicon material filled inside the carbon matrix, which may cause surplus pores inside the particles, and lead to the problem of a decreased strength of the particles in the anode material. In the present application, changes in pore volume and in mass of the anode material before and after the removal of the active substance are measured to further characterize a proportion of the active substance in the pores of the carbon matrix in the anode material, i.e., the deposition parameter $\gamma$. In the present application, when the deposition parameter $\gamma$ of the active substance is greater than or equal to 0.86, it indicates that a large part of the active material is distributed in the pores of the carbon matrix, which can reduce the side reaction between the anode material and the liquid electrolyte during charging and discharge, and improve the cycle performance of the battery. Moreover, hydrolysis of the active substance, i.e., gas production, during slurry preparation and battery use, is reduced, thereby improving the safety performance of the battery. Furthermore, given a certain content of the silicon material in the anode material, an increased content of the silicon material in the pores of the carbon matrix may also improve particle strength of the anode material. In some other examples, when the deposition parameter $\gamma$ is less than 0.86, a specific pore volume, a specific surface area, a proportion of micropores volume (pores with a pore size less than or equal to 2 nm), and an amount of gas production of the resulting anode material are all significantly increased, which is unfavorable for good electrochemical performance. It also indicates that setting the deposition parameter $\gamma$ to be greater than or equal to 0.86 in the present application has an important practical application value in obtaining an anode material with a relatively large amount of active substance disposed in the pores of the carbon matrix.

The anode material satisfying the above requirements of $\alpha$, $\beta$ and $\gamma$ has an excellent filling effect of the active substance, and a large amount of the active substance distributed in the pores of the carbon matrix reduces gas production of the anode material, and facilitates the conductive performance of the carbon matrix, so that a secondary battery using the anode material has higher specific discharge capacity and initial coulombic efficiency, and better cycle stability.

In some examples, $0.5 \leq \alpha < \beta \leq 10$. For example, $\alpha$ may be independently exemplified as 0.5, 1.0, 1.5, 1.8, 1.9, 2.2, 2.7, 2.9, 3, 4, 5, 6, 7, 8, 9, or any value within a range limited by any two of the above values; or $\beta$ may be independently exemplified as 1, 2, 3, 4, 4.7, 4.8, 5.2, 5.6, 7.8, 8.9, 9.5, 9.8, 10, or any value within a range limited by any two of the above values; or $\alpha$ and $\beta$ may be 1.5 and 5.6, 2.1 and 10, 1.0 and 4.8, 1.9 and 8.9, 0.5 and 4.7, 2.9 and 9.8, 2.7 and 9.5, 2.2 and 7.8, 1.8 and 5.2, or any other combination of values that satisfies the above relationship. It will be appreciated that the content of nitrogen atoms in the carbon matrix may be adjusted and controlled by controlling the magnitudes of $\alpha$ and $\beta$, and when $\alpha$ and $\beta$ satisfy the above relationship and range, sufficient nitrogen doping can be formed in the carbon matrix, thereby facilitating a function of the nitrogen atoms in enhancing the adsorption of the active substance into the pores of the carbon matrix, and promoting the distribution of more active substance in the pores of the carbon matrix. As a result, side reaction between the anode material and the liquid electrolyte is reduced, gas production of the anode material is further limited, and the capacity utilization, initial coulombic efficiency and cycle stability of the secondary battery are improved.

In some examples, the anode material includes a core and a coating layer provided on at least part of a surface of the core. The core includes a carbon matrix and an active substance. a material of the coating layer includes one or more of carbon materials, metal oxides, amorphous silicon, conductive polymers, fluoride compounds, phosphates or nitrides. The coating layer may reduce solubility of the core part of the anode material in the liquid electrolyte, which in turn reduces the amount of gas production from the reaction of the dissolved active substance (e.g., silicon material) with the liquid electrolyte. The carbon material may include one or more of graphene, soft carbon, or hard carbon. The carbon coating layer on an outer layer of the anode material has good conductivity, and can improve the conductivity of the anode material.

In some examples, the coating layer may be a single-layer coating layer formed of only one of the materials described above, or a coating layer formed of a combination of multiple materials as described above, or a multi-layer coating layer formed of a single material, or a multi-layer coating layer formed of a variety of materials, and so on, and the layer structure of the coating layer may be selected according to the actual need. The coating layer has a higher density in the case of a multi-layer coating structure.

In some examples, the coating layer has a thickness of 5 nm to 200 nm. For example, the thickness of the coating layer may be 5 nm, 10 nm, 20 nm, 30 nm, 60 nm, 80 nm, 100 nm, 120 nm, 150 nm, 180 nm, 200 nm, or any value within a range limited by any two of the above values. The thickness of the coating layer controlled within the above range can ensure the strength of the coating layer without affecting the energy density, facilitate particle structure stability of the anode material during cycling, reduce the active substance exposed on the surface of the anode material, and reduce the risk of generating a large number of SEIs during charging and discharge due to the exposed active substance, while maintaining the anode material at a good interface resistance, and improving the specific capacity and electrochemical performance of the anode material.

In some examples, a mass proportion of the coating layer in the anode material is less than or equal to 10%. For example, the mass proportion of the coating layer may be 10%, 9%, 8%, 7%, 6%, 5%, 4%, 3%, 2%, 1%, or any value within a range limited by any two of the above values. The mass proportion of the coating layer in the anode material within the above range enables enough electrode active ions for intercalation, which in turn enables a relatively high charge/-discharge capacity of the battery, and reduces the risk of decreased conductivity.

In some examples, the carbon matrix has a specific surface area of 800 $m^2/g$ to 3000 $m^2/g$. For example, the specific surface area of the carbon matrix may be 800 $m^2/g$, 1000 $m^2/g$, 1200 $m^2/g$, 1400 $m^2/g$, 1600 $m^2/g$, 1800 $m^2/g$, 2000 $m^2/g$, 2300 $m^2/g$, 2500 $m^2/g$, 2800 $m^2/g$, 3000 $m^2/g$, or any value within a range limited by any two of the above values. The specific surface area of the carbon matrix controlled within the above range can facilitate uniform dispersion and stable attachment of the active substance on the carbon matrix, thereby reducing the risk of active substance falling off the carbon matrix, and improving the stability of the active substance.

In some examples, the carbon matrix has a specific pore volume of 0.5 $cm^3/g$ to 2.0 $cm^3/g$. For example, the specific pore volume of the carbon matrix may be 0.5 $cm^3/g$, 0.8 $cm^3/g$, 1 $cm^3/g$, 1.2 $cm^3/g$, 1.5 $cm^3/g$, 1.8 $cm^3/g$, 2.0 $cm^3/g$, or any value within a range limited by any two of the above values. The carbon matrix with abundant pores can accommodate the active substance, and reserve space for volume expansion of the accommodated active substance, which can help to improve the capacity and cycle stability of the battery prepared from the anode material.

In some examples, the carbon matrix has a porosity of 40% to 80%. For example, the porosity of the carbon matrix may be 40%, 45%, 50%, 55%, 60%, 65%, 70%, 75%, 80%, or any value within a range limited by any two of the above values. The porosity is a percentage of the volume of pores in the material to a total volume of the material in a natural state. The porosity of the carbon matrix controlled within the above range can facilitate good deposition of the active substance, thereby reducing the volume expansion effect of the anode material.

In some examples, the carbon matrix includes one or more of hard carbon, soft carbon, natural graphite, artificial graphite, carbon nanotubes, carbon fibers, or graphene. The carbon matrix made of any of the above materials can serve to provide distribution sites for the active substance and form a conductive network.

In some examples, the active substance includes one or more of Li, Na, K, Sn, Ge, Si, Fe, Mg, SiO, Ti, Zn, Al, P or Cu. By combining the carbon matrix with the metal material, the metal material can induce lithium (or sodium or potassium) to precipitate in the pores in the form of an alloy formed with the metal, thereby increasing the storage space for lithium (or sodium or potassium) in the carbon matrix. The carbon matrix combined with phosphorus can increase the conductivity while reducing the volume changes of the anode material during the discharge/charging process.

In some examples, the active substance includes a silicon material including one or more of amorphous silicon, crystalline silicon, or a compound of crystalline silicon and amorphous silicon. When the active substance includes a silicon material, the silicon material is used as a component of the anode active substance, which can improve the specific capacity of the anode material, and thereby increase the energy density of the secondary battery. Preferably, the silicon material includes amorphous silicon. When the active substance further includes amorphous silicon, the amorphous silicon isotropically expands during lithium intercalation, which can reduce collapse of the pores in the material, inhibit rapid decline of the specific capacity of the anode material, and can further improve the lithium intercalation cycle performance of the anode material.

In some examples, the silicon material includes one or more of silicon particles, silicon oxides or silicon alloys. In some examples, the silicon material includes silicon particles and a silicon oxide layer on surfaces of the silicon particles, and the silicon oxide layer includes a silicon oxide.

In some examples, the silicon material has an average particle size of 0.1 nm to 500 nm. For example, the average particle size of the silicon material may be 0.1 nm, 0.5 nm, 1 nm, 5 nm, 10 nm, 20 nm, 30 nm, 50 nm, 80 nm, 100 nm, 200 nm, 300 nm, 400 nm, 450 nm, 500 nm, or any value within a range limited by any two of the above values. For example, the silicon material may be silicon particles, and by providing the silicon particles with an average particle size within the above range, the mechanical stress caused by volume expansion of the silicon particles can be reduced, so that the secondary battery maintains a better battery capacity and irreversible capacity loss is reduced. Further, the transmission paths for electrons and ions are shortened, while the size of the silicon particles is reduced and the gap between adjacent silicon particles is increased, reserving space for volume expansion of the silicon particles.

In some examples, the coating layer includes a carbon material, and based on the mass of the anode material, a mass proportion of carbon in the anode material is 40% to 60%. For example, the mass proportion of carbon may be 40%, 43%, 45%, 50%, 53%, 55%, 58%, 60%, or any value within a range limited by any two of the above values, and further preferably, in a range from 40% to 55%. The carbon material is originated from the carbon matrix and the coating layer, and the carbon material is compounded with the silicon material to provide a conductive platform and buffer space for the silicon material, and alleviate the problem of structural instability and poor conductivity of the anode material during cycling.

In some examples, the active substance includes a silicon material, and based on the mass of the anode material, silicon in the anode material is 30% to 65%. For example, the mass proportion of silicon in the anode material may be 30%, 35%, 40%, 45%, 50%, 55%, 60%, 65%, or any value within a range limited by any two of the above values, and further preferably, in a range from 45% to 60%. The main composition of the silicon material is silicon, and the anode material with the carbon matrix compounded with the silicon material can effectively solve the problem of expansion of the silicon material during cycling, thereby maintaining the stability of the battery material, and improving the volume capacity of the material.

In some examples, the anode material has a specific surface area of 0.5 m²/g to 10 m²/g. For example, the specific surface area of the anode material may be 0.5 m²/g, 1 m²/g, 2 m²/g, 3 m²/g, 4 m²/g, 5 m²/g, 6 m²/g, 7 m²/g, 8 m²/g, 9 m²/g, 10 m²/g, or any value within a range limited by any two of the above values. In the case of a relatively large specific surface area of the anode material, the SEI film on the surface of the anode material will consume an excessive amount of lithium salt, and the volume effect tends to cause electrical detachment between the particles, resulting in decreased specific discharge capacity and coulombic efficiency of the battery. Therefore, the relatively small specific surface area of the anode material in this embodiment can help to improve the initial specific discharge capacity and initial coulombic efficiency of the battery. Further, the specific surface area of the anode material may be preferably from 0.5 m²/g to 2.5 m²/g. The specific surface area of the anode material further controlled within the above range can help to further improve the initial specific discharge capacity and initial coulombic efficiency of the battery.

In some examples, the anode material has a powder conductivity of 0.5 S/cm to 3 S/cm. For example, the powder conductivity of the anode material may be 0.5 S/cm, 1 S/cm, 1.5 S/cm, 2 S/cm, 2.5 S/cm, 3 S/cm, or any value within a range limited by any two of the above values. The powder conductivity of the anode material reflects the conductive performance of the anode material, and the good conductive performance can facilitate capacity utilization of the battery. Further, the powder conductivity of the anode material may be preferably 1.5 S/cm to 3 S/cm. The powder conductivity of the anode material further controlled within the above range can facilitate the utilization of lithium in the lithium-ion battery.

In some examples, the anode material has a 24-hour gas production value of less than or equal to 4 cc/(kg • day). For example, the 24-hour gas production value of the anode material may be 0.5 cc/(kg • day), 0.6 cc/(kg • day), 0.8 cc/(kg • day), 0.9 cc/(kg • day), 1 cc/(kg • day), 1.1 cc/(kg • day), 1.2 cc/(kg • day), 1.3 cc/(kg • day), 2 cc/(kg • day), 2.5 cc/(kg • day), 3 cc/(kg • day), 4 cc/(kg • day), or any value within a range limited by any two of the above values. The relatively low gas production value of the anode material can help to reduce the consumption of the active substance and enhance the cycle stability of the battery. Further, the 24-hour gas production value of the anode material may be preferably less than 2.7 cc/(kg • day). The gas production value of the anode material further controlled within the above range can help to further reduce gas production of the anode material, and improve the cycle stability.

In some examples, the anode material has a median particle size D50 of 5 $\mu$m to 20 $\mu$m. For example, the median particle size D50 of the anode material may be 5 $\mu$m, 6 $\mu$m, 8 $\mu$m, 10 $\mu$m, 12 $\mu$m, 14 $\mu$m, 17 $\mu$m, 20 $\mu$m, or any value within a range limited by any two of the above values. The median particle size of the anode material further controlled within the above range can help to improve the cycle performance of the anode material.

In some examples, the anode material has a particle size distribution (D90-D10)/D50 of 0.9 to 5. For example, the particle size distribution (D90-D10)/D50 of the anode material may be 0.9, 1, 1.2, 1.5, 2, 2.6, 3, 3.5, 4, 4.3, 4.6, 4.8, 5, or any value within a range limited by any two of the above values. When the particle size distribution of the anode material is within the above range, particles of larger size and smaller size in the anode material can cooperate with each other, with the smaller particles filled into pores between the larger particles, thereby improving the tap density of the anode material.

In the measured volume-based cumulative particle size distribution, D10 represents a particle size at which the cumulative particle size distribution percentage of the powder reaches 10%, D50 represents a particle size at which the cumulative particle size distribution percentage reaches 50%, and D90 represents a particle size at which the cumulative particle size distribution percentage reaches 90%.

In some examples, the anode material has a compaction density of 0.8 g/cm$^3$ to 1.3 g/cm$^3$ at a pressure of 1T. For example, the compaction density may be 0.8 g/cm$^3$, 0.9 g/cm$^3$, 1.0 g/cm$^3$, 1.1 g/cm$^3$, 1.2 g/cm$^3$, 1.3 g/cm$^3$, or any value within a range limited by any two of the above values. The compaction density controlled within the above range can help to reduce diffusion paths of lithium ions in the anode material, thereby improving the rate capability of the battery.

In some examples, the anode material has a tap density of 0.5 g/cm$^3$ to 1.5 g/cm$^3$ after 3000 times of vibration. For example, the tap density may be 0.5 g/cm$^3$, 0.7 g/cm$^3$, 0.9 g/cm$^3$, 1.1 g/cm$^3$, 1.3 g/cm$^3$, 1.5 g/cm$^3$, or any value within a range limited by any two of the above values. The tap density controlled within the above range can help to form a suitable degree of compactness in the internal structure of the anode material, thereby improving transport of lithium ions and conduction of electrons, enhancing the battery energy density, prolonging the cycle life, and improving the safety performance.

The anode material active layer further includes a binder for bonding anode active substance particles to facilitate formation of a film layer, while improving the bonding between the anode material active layer and the anode current collector. In some examples, the binder may include, but is not limited to, polyvinyl alcohol, hydroxypropyl cellulose, diacetyl cellulose, polyvinyl chloride, carboxylated polyvinyl chloride, polyvinyl fluoride, ethylene oxide-containing polymers, polyvinyl pyrrolidone, polyurethane, polytetrafluoroethylene, polyvinylidene fluoride, polyethylene, polypropylene, styrene-butadiene rubber, acrylated styrene-butadiene rubber, epoxy resin, or nylon.

The anode material active layer may further include a conductive material including, but not limited to, a carbon-based material, a metal-based material, a conductive polymer, or any combination thereof. In some examples, the carbon-based material may include, but is not limited to, natural graphite, artificial graphite, carbon black, acetylene black, Ketjen black, carbon fibers, or any combination thereof. In some examples, the metal-based material may include, but is not limited to, metal powder or metal fibers, such as copper, nickel, aluminum, or silver. In some examples, the conductive polymer may be a polyphenylene derivative.

**Isolation Film**

The isolation film 103 includes a film layer having a porous structure made of a material including, but not limited to, at least one of polyethylene, polypropylene, polyvinylidene fluoride, polyethylene terephthalate, polyimide, or aramid. For example, the isolation film 103 may be a polypropylene porous membrane, a polyethylene porous membrane, a polypropylene nonwoven, a polyethylene nonwoven, or a polypropylene-polyethylene-polypropylene porous composite membrane.

**Electrolyte**

The electrolyte has a function of conducting ions between the cathode sheet 101 and the anode sheet 102. The electrolyte may have a state including one or more of a gel state, a solid state, or a liquid state. In some examples, the electrolyte is a liquid electrolyte. The liquid electrolyte has a function of conducting active ions between the cathode sheet 101 and the anode sheet 102. In some examples, the liquid electrolyte includes a lithium salt and an organic solvent. The lithium salt may be selected from a group including, but not limited to, one or more of $LiPF_6$, $LiBF_4$, $LiAsF_6$, $LiClO_4$, $LiB(C_6H_5)_4$, $LiCH_3SO_3$, LiFSI, LiTFSI, $LiCF_3SO_3$, $LiN(SO_2CF_3)_2$, $LiC(SO_2CF_3)_3$, LiBOB or $LiPO_2F_2$. For example, $LiPF_6$ is selected as the lithium salt, because it enables a high ionic conductivity and improved cycle properties. The organic solvent may be a carbonate compound, a carboxylate ester compound, an ether compound, a nitrile compound, any other organic solvent, or any combination thereof. Instances of the carbonate compound include, but are not limited to, DEC, DMC, DPC, MPC, EPC, MEC, EC, PC, BC, VEC, FEC, 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or combinations thereof.

Another embodiment of the present application further provides a preparation method for an anode material, including the following first to fourth steps.

In a first step: a carbon matrix, a zinc salt and an organic active agent are mixed. The organic active agent includes one or more of PVA, PVP or Pluronic F127. The mixture is heated under a reducing gas atmosphere to reduce and attach zinc ions in the zinc salt to the carbon matrix, thereby obtaining a first precursor.

The organic active agent has amino and hydroxyl groups, which may be, for example, a non-ionic active agent or anionic active agent that can facilitate reduction of the zinc salt and attachment of the reduced elemental zinc on a surface and in pores of the carbon matrix.

In some examples, the zinc salt includes one or more of zinc chloride, zinc nitrate, zinc acetate, or zinc sulfate.

In some examples, the reducing gas includes hydrogen. It will be appreciated that the reducing gas atmosphere may further include an inert gas. For example, the reducing gas atmosphere may be hydrogen, a mixture of hydrogen and helium, a mixture of hydrogen and nitrogen, or the like.

In some examples, the heating is performed at 600 °C to 800 °C for 2h to 6h. For example, the heating temperature may be 600°C, 620°C, 650°C, 700°C, 750°C, 780°C, 800°C, or any value within a range limited by any two of the above values. The heating time may be 2h, 2.5h, 3h, 3.5h, 4h, 4.5h, 5h, 5.5h, 6h, or any value within a range limited by any two of the above values.

In a second step: the first precursor is mixed with and dissolved in an acid solution to obtain a second precursor.

The acid solution may act on and reduce the metal elemental zinc attached to the surface of the carbon matrix, thereby obtaining a carbon matrix precursor with the metal elemental zinc attached into the pores, i.e., the second precursor.

In some examples, the acid solution includes one or two of hydrochloric acid, sulfuric acid, nitric acid, or phosphoric acid.

In some examples, the acid solution has a concentration of 0.5 mol/L to 2 mol/L. For example, the concentration of the acid solution may be 0.5 mol/L, 0.7 mol/L, 1 mol/L, 1.2 mol/L, 1.5 mol/L, 1.8 mol/L, 2 mol/L, or any value within a range limited by any two of the above values. In some examples, the dissolution time in the acid solution is 1h to 20h. For example, the dissolution time may be 1h, 3h, 5h, 8h, 10h, 12h, 15h, 17h, 19h, 20h, or any value within a range limited by any two of the above values. The concentration and dissolution time of the acid solution within the above ranges can facilitate a function of the acid solution in removing the elemental zinc from the surface of the carbon matrix, while reducing the reaction between the acid solution and the elemental zinc in the pores of the carbon matrix.

In a third step: ammonia and a protective gas are mixed at a certain volume ratio and reacted with the second precursor under high-temperature conditions, with a concentration of ammonia ranging from 1% to 50%, a reaction temperature ranging from 400 °C to 1000 °C, a reaction time ranging from 0.5h to 10h, and a reaction pressure ranging from 1 Pa to 100 kPa, to obtain a third precursor.

For example, the concentration of ammonia may be 1%, 5%, 10%, 15%, 20%, 30%, 40%, 45%, 50%, or any value within a range limited by any two of the above values. The reaction temperature may be 400°C, 600°C, 650°C, 700°C, 750°C, 800°C, 850°C, 900°C, 950°C, 1000°C, or any value within a range limited by any two of the above values. The reaction time may be 0.5h, 1h, 2h, 4h, 5h, 7h, 8h, 9h, 10h, or any value within a range limited by any two of the above values. The reaction pressure may be 1 Pa, 50 Pa, 500 Pa, 1 kPa, 10 kPa, 20 kPa, 40 kPa, 60 kPa, 80 kPa, 100 kPa, or any value within a range limited by any two of the above values.

Sufficient ammonia gas molecules are made to enter the pores of the carbon matrix under negative pressure conditions, to facilitate doping of nitrogen atoms in the pore apertures of the carbon matrix, which can further improve the surface chemical activity of the carbon material to enhance adsorption of the material to gas-phase silane molecules, and improve the deposition effect. The concentration of ammonia controlled within the above range in the above process can help to dope sufficient nitrogen atoms in the anode material to exert the above effect of nitrogen doping, and form a distribution of nitrogen atoms in the anode material in accordance with a preset trend. The reaction temperature and reaction time controlled within the above ranges in the above process can facilitate the reaction between ammonia and the second precursor, thereby facilitating the doping of sufficient nitrogen atoms in the anode material, and formation of a distribution of nitrogen atoms in accordance with a preset trend.

In some examples, the protective gas includes at least one of nitrogen, helium, neon, argon, or krypton.

In a fourth step: the third precursor is mixed with the active substance precursor, and then subjected to vapor deposition to obtain the anode material.

During the vapor deposition, the active substance is deposited into the pores of the carbon matrix under a catalytic effect of the metal elemental zinc so that the active substance in the prepared anode material are mainly distributed in the pores of the carbon matrix, which reduces the reaction between the active substance attached to or dissolved from the surface of the anode material and the liquid electrolyte, and effectively reduces the gas production value while improving the powder conductivity of the anode material, thereby enhancing the performance of the battery prepared with the anode material in various aspects.

In some examples, when the active substance is a silicon material, the active substance precursor includes a silicon-containing gas including one or more of silane, disilane, trisilane, or tetrasilane.

In some examples, the silicon-containing gas has a concentration of 10% to 80%. For example, the concentration of the silicon-containing gas may be 10%, 15%, 20%, 30%, 50%, 70%, 80%, or any value within a range limited by any two of the above values. Further, a gas used to dilute the silicon-containing gas may be selected from one or two of an inert gas or hydrogen.

In some examples, the vapor deposition is performed at 300°C to 800°C. For example, the temperature of the vapor deposition may be 300°C, 400°C, 450°C, 500°C, 520°C, 550°C, 600 °C, 700°C, 800°C, or any value within a range limited by any two of the above values.

In some examples, the vapor deposition lasts for 0.5h to 15h. For example, the time of the vapor deposition may be 0.5h, 1h, 2h, 5h, 8h, 10h, 12h, 15h, or any value within a range limited by any two of the above values.

The process conditions (e.g., deposition temperature, and deposition time) of vapor deposition will affect the deposition of silicon material into the pores of the carbon material, and controlling the temperature and time of the vapor deposition within the above ranges can help to reduce decomposition and deposition of the reactant gas before entering the pores of the carbon material, and promote decomposition and deposition of the reactant gas after entering the pores.

In some examples, after the vapor deposition, the method further includes coating the resulting product (i.e., the core). The coating includes at least one of carbon coating, oxide coating, metal salt coating, polymer coating, or the like. Further, combinations of various coating methods are preferred, such as carbon coating followed by oxide coating, or carbon coating followed by metal salt coating, and the like.

In some examples, when the coating includes carbon coating, the material of the coating layer includes a carbon material which is originated from at least one of gas-phase carbon, liquid-phase carbon, or solid-phase carbon. The gas-phase carbon includes at least one of methane, acetylene, ethylene, ethane, propane, propylene, gaseous benzene, gaseous toluene, gaseous xylene, gaseous ethanol, gaseous cyclohexane, gaseous methanol, or gaseous acetone. A liquid-phase carbon source includes at least one of n-hexane, toluene, benzene, xylene, methanol, ethanol, propanol, butanol, pentanol, acetone, acetone, butanone, 2-pentanone, methyl acetate, ethyl acetate, acetic acid propyl acetate, butyl acetate, amyl acetate, or glycerol. A solid-phase carbon source includes at least one of polyvinyl chloride, polyvinyl butyral, polyacrylonitrile, polyacrylic acid, polyethylene glycol, polypyrrole, polyaniline, sucrose, dextrose, maltose, citric acid, asphalt, furfural resin, epoxy resin, or phenolic resin.

In some examples, the coating includes mixing the coating material with the core for heat treatment.

The solutions of the present application will be explained below in connection with examples. It will be understood by those skilled in the art that the following examples are intended only to explain the present application, and are not to be construed as limitations to the present application. Unless otherwise stated, the reagents, software, and instruments involved in the following examples that are not specifically explained are either conventional commercially available products or open-source products.

Example 1:

An anode material is provided, and a preparation method for the anode material includes the following steps S1 to S6.

At S1, 2 kg of zinc chloride, 400 g of Pluronic F127 are weighed and dissolved into 20 L of water. Then 5 kg of activated carbon is added and stirred for 24h. After filtering and drying, the mixture is placed into a rotary furnace, and calcined for 4h at 900°C under an argon atmosphere to obtain a first precursor.

At S2, the first precursor is put into 20 L of 1mol/L dilute sulphuric acid and stirred for 4h. Then the sample is washed with pure water and dried for later use to obtain a second precursor.

At S3, the second precursor is placed into a reaction chamber and heated to 800°C under a nitrogen atmosphere, with a pressure in the chamber maintained at 100 kPa. Then the second precursor is reacted with a mixture including 90% nitrogen and 10% ammonia for 2h to obtain a third precursor.

At S4, the chamber temperature is adjusted to 520°C, silane and carrier gas, which is a mixture of nitrogen, argon, and hydrogen, are introduced into the chamber, a silane concentration is controlled to 15%, and reaction is performed for 10h to obtain a core material.

At S5, the chamber temperature is adjusted to 700°C, methane and carrier gas, which is a mixture of nitrogen, argon, and hydrogen, are introduced into the chamber, a methane concentration is controlled to 15%, and the conditions are kept for 4h. Subsequently, the methane gas is turned off, nitrogen is introduced, and the temperature is cooled down to room temperature.

At S6, the obtained samples are screened and graded to obtain the anode material.

Example 2:

This example differs from example 1 in that the compositions of the gas mixture in S3 are adjusted to 80% nitrogen and 20% ammonia.

Example 3:

This example differs from example 1 in that the reaction temperature in S3 is adjusted to 600°C.

Example 4:

This example differs from example 1 in that the reaction temperature in S3 is adjusted to 1000°C.

Example 5:

This example differs from example 1 in that the reaction time in S3 is adjusted to 0.5h.

Example 6:

This example differs from example 1 in that the reaction time in S3 is adjusted to 4h.

Example 7:

This example differs from example 1 in that the compositions of the gas mixture in S3 are adjusted to 80% nitrogen and 20% ammonia, the reaction temperature is adjusted to 700°C, the reaction pressure is adjusted to 50 kPa, and the reaction time is adjusted to 1h.

Example 8:

This example differs from example 1 in that the compositions of the gas mixture in S3 are adjusted to 50% nitrogen and 50% ammonia, the reaction pressure is adjusted to 50 kPa, and the reaction time is adjusted to 0.5h.

Example 9:

This example differs from example 1 in that the compositions of the gas mixture in S3 are adjusted to 95% nitrogen and 5% ammonia, the reaction temperature is adjusted to 700°C, the reaction time is adjusted to 10h.

Example 10:

This example differs from example 1 in that S5 is omitted.

Example 11:

This example differs from example 1 in that the treatment in S3 is performed at atmospheric pressure.

Example 12:

This example differs from example 1 in that the compositions of the gas mixture in S3 are adjusted to 99% nitrogen and 1% ammonia.

Example 13:

This example differs from example 1 in that the reaction temperature in S3 is adjusted to 400°C.

Example 14:

This example differs from example 1 in that the reaction time in S3 is adjusted to 10 min.

Comparative example 1:

This example differs from example 1 in that S3 is omitted.

Comparative example 2:

This example differs from example 1 in that the compositions of the gas mixture in S3 are adjusted to 20% nitrogen and 80% ammonia.

Comparative example 3:

This example differs from example 1 in that the reaction temperature in S3 is adjusted to 1800°C.

Comparative example 4:

This example differs from example 1 in that the reaction time in S3 is adjusted to 20h.

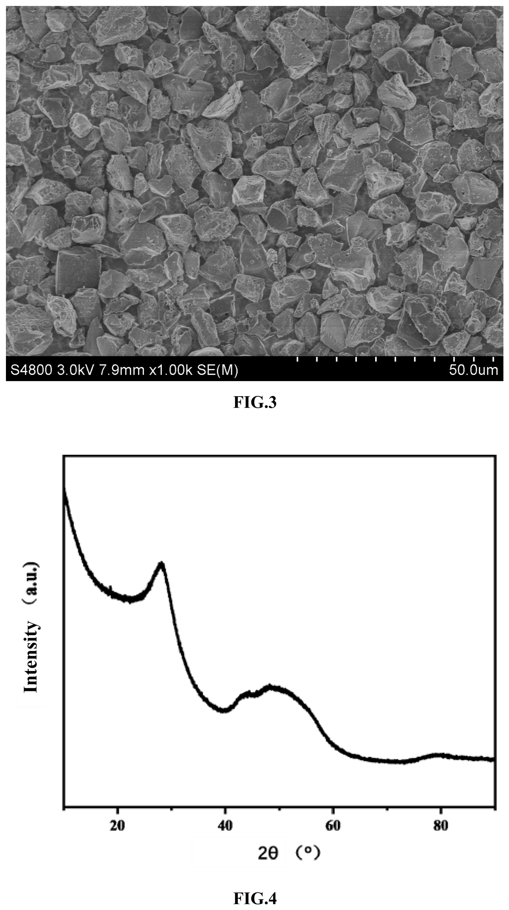

Taking example 1 as an example, the anode material obtained in example 1 is tested with a scanning electron microscope (Hitachi S4800) at a voltage of 3 kV and a current of 10 $\mu$A. After image focusing and astigmatism correction, referring to FIG. 3, the anode material prepared in the example of the present application is uniformly distributed without obvious agglomeration, indicating that with the preparation method of the present application, uniform distribution of the coating on the graphite material can be achieved.

Taking example 1 as an example, an X-ray diffraction analyzer (Rigaku Ultima 1v.) is used to test the anode material obtained in example 1, where a copper (Cu) K$\alpha$ line is used as an X-ray source, with an incidence angle ranging from 10° to 90° and a step of 0.02°. Referring to FIG. 4, the characteristic broad hump appears at $2\theta=28.4°$, indicating that the silicon in the anode material is mainly amorphous silicon.

The anode materials obtained from the above examples 1 to 14 and comparative examples 1 to 4 are tested for the following physical and electrochemical properties:

1. Test of $\alpha$, $\beta$ of the anode material: An X-ray photoelectron spectroscopy test is performed on the anode material with a Thermo Scientific K-Alpha device. The whole testing process is performed in a glove box filled with argon. High-resolution spectra for four elements, i.e., C, O, Si and N, are required in each spectrum acquisition, and a sputtering depth of argon ions for each time is 50 nm. The specific test mode includes: acquiring spectrum + etching 50 nm, sputtering 4 times to get a nitrogen atomic percent at a depth of 200 nm, sputtering 20 times to get a nitrogen atomic percent at a depth of 1000 nm, random sampling 10 times at the same depth for the test, and averaging the results to obtain $\alpha3$ and $\beta3$. It will be appreciated that it is only required that the sputtering depths respectively fall within the first region and the second region. For example, it is also possible to perform 2 sputtering times to obtain $\alpha1$, 3 sputtering times to obtain $\alpha2$, 25 sputtering times to obtain $\beta1$, and 30 sputtering times to obtain $\beta2$, where $\alpha = (\alpha1+\alpha2+\alpha3)/3$ and $\beta= (\beta1+\beta2+\beta3)/3$.

2. Test of the deposition parameter $\gamma$ of the silicon material in the anode material: Step 1: a mass $m_1$ of the anode material is taken, and a specific pore volume $p_1$ is measured with a Micromeritics ASAP2460 micropore specific surface area and pore size analyzer. The material is baked in an oxygen atmosphere in a SA2-9-17TP box-type atmosphere furnace from Nanyang Xinyu so that the silicon and silicon monoxide in the samples are reacted to form silicon dioxide, and the carbon is burned to form carbon dioxide which is discharged, and a content percentage $a_1$ of silicon is weighed and calculated.

Step 2: Prepare an acid solution by mixing HCl with a concentration of 70% and HF with a concentration of 50% at a volume ratio of 2:1. Place the anode material with a mass of $m_1$ into a sufficient amount of this solution, stir it for more than 10 hours, then wash and dry it. The mass of the remaining material is measured as $m_2$.

Step 3: Take the remaining material with a mass of $m_2$ obtained in Step 2, and test the specific pore volume of the remaining material (denoted as $p_2$) and the mass percent of silicon (denoted as $a_2$) using the same testing method as that in Step 1.

The theoretical density of the silicon material is taken as 2.34 g/cm$^3$, and the deposition parameter $\gamma$ of the silicon material in the anode material is calculated by the following formula:

$$\gamma = \frac{m_2 \times p_2 - m_1 \times p_1}{(m_1 \times a_1 - m_2 \times a_2)/2.34}.$$

3. Test of specific surface areas, specific pore volumes and porosities of the anode material and the carbon matrix:

a) Taking the active substance being a silicon material as an example, in a stirring state, 150 mL of an HF acid solution with a mass fraction 20% is added into 10g of the anode material drop by drop, which will produce $SiF_4$ and $H_2$ and release heat. When no gas is produced any more, supernatant acid is removed centrifugally. Then 150 mL of an HF acid solution with a mass fraction 20% is added into the anode material again and stirred for 12h, and supernatant acid is removed centrifugally again. Next, the anode material is washed with pure water to neutral and dried to obtain the anode material without the silicon material, i.e., the carbon matrix.
b) A specific surface area of the material is measured with a Micromeritics ASAP2460 micropore specific surface area and pore size analyzer.
c) A pore volume of the material may be measured by gas adsorption measurement, while nitrogen adsorption is a technique for characterizing the porosity and pore size distribution of a material by condensing a gas into pores of a solid. As the pressure rises, the gas is firstly condensed into pores with the smallest diameter, and as the pressure further rises to a saturation point, all pores are filled with liquid. Then the nitrogen pressure is gradually reduced to allow the liquid to be evaporated from the system. Analysis of the adsorption and desorption isotherms allows determination of the pore volume and pore size distribution, as well as the respective proportions of the pore volumes of micropores, mesopores, and macropores in the total pore volume.

4. Test of powder conductivity of the anode material: The conductivity at a pressure point of 20 KN is tested with an MCP-PD51 powder resistance test system from Mitsubishi Chemical, Japan, and the four-probe method is used to determine a volume resistivity of the sample. This instrument can measure the resistance of powder, and then the computer can automatically calculate the conductivity and resistivity of the powder.

5. Test of gas production of the anode material:

a) In a sealed container, 5 g of the anode material is loaded, and deionized water is added until a remaining volume at an upper part of the container is 60 mL.
b) The container is sealed, and the contents are mix well and stored at room temperature.
c) After 24 hours, the container is shaken sufficiently again to disperse precipitate into the liquid.

A lid of the container is opened, and a hydrogen concentration is detected with a hydrogen detector and converted to cc/(kg·day). cc/(kg·day) means that it refers to the volume of gas (in cubic centimeters, abbreviated as cc) generated by per kilogram (kg) of anode material within 24 hours (referred to as "day" herein).

6. Test of particle size test of the anode material: the test method refers to GB/T 19077-2016. D50 is measured using a Malvern Laser Particle Size Analyzer (Mastersizer 3000) , and there is a symmetric distribution like normal distribution. In the volume-based distribution, the cumulative 50% diameter is D50, so on and so forth, the cumulative 90% diameter is D90, and the cumulative 10% diameter is D10, so that the particle size distribution (D90-D10)/D50 of the material can also be obtained.

7. Test of compaction density of the anode material: With a Mycro CARVER 4350.22 powder compaction density analyzer, a specified mass m of the sample is placed in the mold and a pressure of 1.0 T is applied, held for 30S, and then removed to test a thickness of the sample, thereby calculating the compaction density.

8. Test of tap density of the anode material: With a Quantachrome DAT-6-220 tap density analyzer, a specified mass of the sample is placed in a measuring cylinder and vibrated a specified number of times (3,000 times for a conventional test), and then a volume of the measuring cylinder is read after the vibration to calculate the tap density.

9. Test of carbon element content of the anode material: With a Bruker G4 ICARUS HF infrared carbon and sulfur analyzer, the sample is burned in a high temperature and rich oxygen state, the carbon element therein is oxidized to carbon dioxide, the generated gas enters the infrared detector with the carrier gas, and the carbon content can be calculated through quantitative statistics of changes in the carbon dioxide signal.

10. Coating Thickness Test: Perform cross-section treatment on the material using FIB-SEM equipment, randomly select 10 particles under SEM, measure the coating thickness 3 times for each particle, and calculate to obtain the coating thickness.

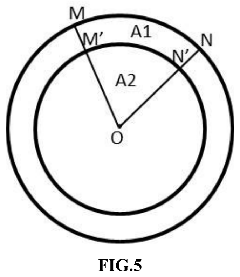

11. Mass Proportion of the Coating Layer: A Dual Beam Focused Ion Beam Scanning Electron Microscope (Dual Beam FIB-SEM) can be used to prepare cross-sections of anode material particles. Randomly select cross-sections of 10 anode material particles, and use the cross-section as the target area, as shown in FIG. 5. Define the intersection point of the longest diameter (or longest diagonal) and the shortest diameter (or shortest diagonal) in the target area as Point O. Draw two straight lines from Point O intersecting the edge (surface of the anode material) of the target area, with the intersection points being M and N respectively. The intersection point of the straight line OM and the edge of the core in the anode material is M', and the intersection point of the straight line ON and the edge of the core in the anode material is N'. The area enclosed by MM'N'N is Area A1, with an area of S1, and the area enclosed by M'N'O is Area A2, with an area of S2. Perform EDS scanning on the above target area to obtain the mass content $c_1$ of carbon element in target Area A1 and the mass content $c_2$ of carbon element in target Area A2. The mass proportion of the carbon material coating layer is calculated as $[S1 \times c1/(S1 \times c1+S2 \times c2)]$ multiplied by the mass content of carbon element in the anode material.

12. Test of electrochemical performance:

The anode materials prepared in the above examples and comparative examples are respectively mixed with sodium carboxymethyl cellulose, styrene-butadiene rubber, as well as conductive graphite (KS-6) and carbon black (SP) at a ratio of 92:2:2:2:2:2 to form slurry which is uniformly coated on a copper foil and dried to form an anode sheet. The anode sheet is assembled into a button cell in a glove box in an argon atmosphere. The separator used is a polypropylene microporous membrane, the liquid electrolyte used is 1 mol/L lithium hexafluorophosphate (the solvent is mixed slurry of ethylene carbonate, ethyl methyl carbonate, and dimethyl carbonate), and the counter electrode used is a metal lithium foil.

The anode materials prepared in the examples and the comparative examples are manufactured into batteries tested for specific discharge capacity on a LAND Electronic CT2001A battery test system, where the specific discharge capacity refers to a ratio of an amount of the electricity discharged for 1 hour to a capacity of the battery.

The anode materials prepared in the examples and the comparative examples are manufactured into batteries tested for the initial coulombic efficiency on a LAND Electronic CT2001A battery test system, where the initial coulombic efficiency is measured at a charge/discharge current of 0.05C. The measured value is an average initial coulombic efficiency of 3 to 5 button cells of each material.

Some preparation conditions for the above examples 1 to 14 and comparative examples 1 to 4 may refer to table 1, and the testing results are shown in table 2.

Table 1. Some preparation conditions for examples 1 to 14 and comparative examples 1 to 4 in the present application

|  | Reaction temperature (°C) | Reaction pressure (kPa) | Ammonia percent (%) | Reaction time (h) |
|---|---|---|---|---|
| Example 1 | 800 | 100 | 10 | 2 |
| Example 2 | 800 | 100 | 20 | 2 |
| Example 3 | 600 | 100 | 10 | 2 |
| Example 4 | 1000 | 100 | 10 | 2 |
| Example 5 | 800 | 100 | 10 | 0.5 |
| Example 6 | 800 | 100 | 10 | 4 |
| Example 7 | 700 | 50 | 20 | 1 |
| Example 8 | 800 | 50 | 50 | 0.5 |
| Example 9 | 700 | 100 | 5 | 10 |
| Example 10 | 800 | 100 | 10 | 2 |
| Example 11 | 800 | / | 10 | 2 |
| Example 12 | 800 | 100 | 1 | 2 |
| Example 13 | 400 | 100 | 10 | 2 |
| Example 14 | 800 | 100 | 10 | 10 min |
| Comparative example 1 | / | / | / | / |
| Comparative example 2 | 800 | 100 | 80 | 2 |
| Comparative example 3 | 1800 | 100 | 10 | 2 |
| Comparative example 4 | 800 | 100 | 10 | 20 |

Table 2. Performance testing results for examples 1 to 14 and comparative examples 1 to 4 in the present application

| | γ | α1 (%) | α2 (%) | α3 (%) | α (%) | β1 (%) | β2 (%) | β3(%) | β(%) | Specific surface area (m$^2$/g) | Powder conductivity (S/cm) | Specific discharge capacit | ICE(%) | Gas production over |
|---|---|---|---|---|---|---|---|---|---|---|---|---|---|---|
| Example 1 | 0.94 | 1.4 | 1.5 | 1.5 | 1.47 | 5.6 | 5.5 | 5.4 | 5.50 | 1.9 | 1.9 | 1998.2 | 92.2 | 1.2 |
| Example 2 | 0.98 | 2.0 | 2.0 | 2.1 | 2.03 | 10.0 | 9.8 | 9.7 | 9.83 | 2.2 | 1.7 | 1992.3 | 91.6 | 1.8 |
| Example 3 | 0.91 | 0.9 | 1.0 | 1.0 | 0.97 | 4.8 | 4.6 | 4.7 | 4.70 | 2 | 1.6 | 1985.1 | 91.3 | 2.6 |
| Example 4 | 0.98 | 1.9 | 1.9 | 1.9 | 1.90 | 8.9 | 9.0 | 8.9 | 8.93 | 2.3 | 1.7 | 1989.6 | 91.5 | 2.2 |
| Example 5 | 0.90 | 0.3 | 0.5 | 0.5 | 0.43 | 4.7 | 4.5 | 4.1 | 4.43 | 2.1 | 1.5 | 1980.5 | 91.8 | 2.4 |
| Example 6 | 0.97 | 2.8 | 2.8 | 2.9 | 2.83 | 9.8 | 8.9 | 8.8 | 9.17 | 2.3 | 1.8 | 1990.0 | 91.2 | 2 |
| Example 7 | 0.94 | 2.0 | 2.6 | 2.7 | 2.43 | 9.5 | 9.1 | 9.0 | 9.20 | 2.1 | 1.7 | 1996.7 | 92.1 | 1.6 |
| Example 8 | 0.92 | 1.9 | 2.0 | 2.2 | 2.03 | 7.8 | 7.3 | 7.6 | 7.57 | 1.9 | 1.8 | 1989.3 | 91.8 | 2.4 |
| Example 9 | 0.92 | 1.6 | 1.8 | 1.8 | 1.73 | 5.2 | 5.1 | 5.2 | 5.17 | 2 | 1.6 | 1986.2 | 91.6 | 1.8 |
| Example 10 | 0.93 | 2.8 | 2.9 | 2.9 | 2.87 | 9.6 | 9.6 | 9.2 | 9.47 | 2.5 | 1.5 | 1998.5 | 91.9 | 3.2 |
| Example 11 | 0.86 | 2.3 | 2.4 | 2.4 | 2.37 | 2.6 | 2.5 | 2.1 | 2.40 | 2.8 | 1.1 | 1976.1 | 89.5 | 4.4 |
| Example 12 | 0.86 | 0.1 | 0.1 | 0.09 | 0.10 | 1.4 | 1.3 | 1.4 | 1.37 | 3 | 1 | 1950 | 89.2 | 5.4 |
| Example 13 | 0.87 | 0.9 | 1.0 | 1.1 | 1.00 | 1.9 | 1.9 | 1.6 | 1.80 | 3.1 | 1.1 | 1965.5 | 89.4 | 4.4 |
| Example 14 | 0.86 | 0.2 | 0.3 | 0.3 | 0.27 | 0.8 | 0.8 | 0.5 | 0.70 | 2.9 | 0.9 | 1951.1 | 89.3 | 5.6 |
| Comparative example 1 | 0.85 | 0.1 | 0.1 | 0.05 | 0.10 | 0.05 | 0.0 | 0.1 | 0.07 | 2.6 | 0.8 | 1940.1 | 88.6 | 5.6 |
| Comparative example 2 | 0.8 | 10.0 | 11.4 | 12.4 | 11.2 7 | 10.6 | 10.5 | 10.6 | 10.57 | 4.2 | 0.7 | 1899.5 | 85.6 | 7.0 |
| Comparative example 3 | 0.83 | 7.0 | 6.8 | 6.5 | 6.77 | 5.6 | 5.0 | 4.9 | 5.17 | 5.1 | 0.6 | 1892.6 | 88.2 | 6.8 |
| Comparative example 4 | 0.82 | 6.2 | 6.0 | 5.8 | 6.00 | 5.1 | 5.1 | 5.1 | 5.10 | 4.8 | 0.8 | 1896.2 | 87.5 | 7.2 |

Under the preparation process conditions of the present application, the anode materials of examples 1 to 14 contain nitrogen, and a structure having a carbon matrix core deposited with a silicon material and a coating layer coated on a surface of the core is formed. Nitrogen has preset content and distribution tendency in the anode material, so that the pores of the carbon matrix have enhanced adsorption capacity for a gas-phase silicon source, which can help to increase a value of the deposition parameter $\gamma$ to some extent, and achieve a deposition parameter $\gamma$ of the silicon material in accord with a preset range. Therefore, relatively less silicon material is deposited on the surface of the carbon matrix, side reaction between the surface of the anode material and the liquid electrolyte is reduced, and gas production of the anode material is also effective reduced. The above anode material has an excellent silicon material filling effect and a low gas production value, and accordingly, the secondary battery with the anode material has higher specific discharge capacity and initial coulombic efficiency, and better cycle stability.

Examples 1 to 9 and 11 to 14 further provide carbon coating, which further improves the comprehensive performance of the resulting anode material. Examples 1 to 11 and 13 further fulfill the preset ranges of $\alpha$ and $\beta$, which further improves the comprehensive performance of the resulting anode material. During the nitrogen doping of the carbon matrix in examples 1 and 2, 3 and 4, and 5 and 6, the ammonia dosage, the reaction temperature, and the reaction time are sequentially increased within suitable ranges, respectively, so that the values of $\alpha$ and $\beta$ in the resulting anode material are both correspondingly increased while maintaining $\alpha < \beta$.

Compared with example 1, there is no nitrogen doping of the carbon matrix in comparative example 1, and a small number of nitrogen atoms are detected in the anode material, which may be regarded as a background value of nitrogen in the anode material, and nitrogen is distributed uniformly in the anode material. Therefore, $\alpha$ and $\beta$ are substantially equal, and comparative example 1 mainly relies on the adsorption ability for the gas-phase silicon source of the carbon matrix itself, causing a filling effect of the silicon material not ideal enough in the obtained anode material (y is smaller than that of example 1). The silicon material distributed on the surface of the carbon matrix occupies a relatively large proportion, and gas production is relatively severe, which may affect the conductive performance of the carbon matrix, and cause an increased specific surface area of the anode material, resulting in lower specific discharge capacity and initial coulombic efficiency of the obtained secondary battery compared with that of example 1.

Compared with example 1, comparative example 2 adopts an excessive amount of ammonia during nitrogen doping of the carbon matrix, resulting in excessive nitrogen doping in the carbon matrix, which is not advantageous for controlling the relationship of $\alpha$ and $\beta$, resulting in $\alpha > \beta$. Comparative example 3 adopts a too high temperature in the process of nitrogen doping of the carbon matrix, which may result in a high cracking rate of ammonia and disordered adhesion of nitrogen atoms, or collapse of the carbon matrix structure, which is not advantageous for controlling the relationship of $\alpha$ and $\beta$, resulting in $\alpha > \beta$. Meanwhile, the too high temperature also aggravates a graphitization degree of the carbon matrix, and hinders deposition of the silicon material. Comparative example 4 employs an excessively long reaction time in the process of nitrogen doping of the carbon matrix, which may cause the subsequently decomposed nitrogen more likely to be doped into a more superficial region of the carbon matrix, resulting in $\alpha > \beta$. In these anode materials, the silicon material distributed on the surface of the carbon matrix also occupies a relatively large proportion, and gas production is relatively severe, which may affect the conductive performance of the carbon matrix, and cause an increased specific surface area of the anode material, resulting in limited specific discharge capacity and initial coulombic efficiency of the obtained secondary battery.

In summary, the present application provides an improved preparation method for an anode material. Under the process conditions of this preparation method, the obtained anode material has $\alpha$, $\beta$ and $\gamma$ within preset ranges, and $\alpha$ and $\beta$ meet a preset relationship, so that the distribution of the active substance in the obtained anode material on the carbon matrix has an excellent filling effect, the gas production of the anode material is reduced, and the conductive performance of the carbon matrix is facilitated, and thereby a secondary battery using the anode material has higher specific discharge capacity and initial coulombic efficiency, and better cycle stability.

The above embodiments are only used to illustrate the technical solutions of the present application and are not intended to be limiting. Although the present application has been described in detail with reference to the above preferred embodiments, those skilled in the art will understand that the technical solutions of the present application may be modified or equivalently replaced without departing from the spirit and scope of the technical solutions of the present application.

**Claims**

1.  An anode material, wherein

    the anode material contains nitrogen, a carbon matrix and an active substance,
    the carbon matrix has pores, into which at least part of the active substance is disposed,
    a region having a depth of less than or equal to 200 nm from an outer surface of the anode material is defined as a first region,

a region having a depth of greater than or equal to 1000 nm from the outer surface of the anode material is defined as a second region,

the first region contains $\alpha$% atomic percent of nitrogen, and the second region contains $\beta$% atomic percent of nitrogen, where

$$\alpha < \beta;$$

and a deposition parameter of the active substance is defined as $\gamma$, and

$$\gamma = \frac{m_2 \times p_2 - m_1 \times p_1}{(m_1 \times a_1 - m_2 \times a_2)/\rho}, \ \gamma \geq 0.86;$$

where $\rho$ is a theoretical density of the active substance;

a mass percent of the active substance in the anode material is $a_1$, and a specific pore volume of the anode material is $p_1$; and

after placing the anode material with a mass of $m_1$ into a sufficient amount of acid solution, stirring it, washing and drying it, a mass of the remaining material is measured as $m_2$, a mass percent of the active substance in the remaining material is $a_2$, and a specific pore volume of the remaining material is $p_2$.

2. The anode material of claim 1, wherein $\gamma$ is 0.86, 0.87, 0.88, 0.89, 0.90, 0.92, 0.94, 0.97, 0.98, 0.99, or any value within a range defined by any two of the above values.

3. The anode material of claim 1, wherein

$$0.5 \leq \alpha < \beta \leq 10.$$

4. The anode material according to claim 3, wherein the anode material satisfies at least one of the following conditions:

   (1) $\alpha$ is 0.5, 1.0, 1.5, 1.8, 1.9, 2.2, 2.7, 2.9, 3, 4, 5, 6, 7, 8, 9, or any value within a range limited by any two of the above values;
   (2) $\beta$ is 1, 2, 3, 4, 4.7, 4.8, 5.2, 5.6, 7.8, 8.9, 9.5, 9.8, 10, or any value within a range limited by any two of the above values.

5. The anode material of claim 1, wherein the anode material contains a core and a coating layer provided on at least part of a surface of the core, the core includes the carbon matrix and an active substance, and the coating layer satisfies at least one of the following conditions:

   (1) a material of the coating layer includes one or more of carbon materials, metal oxides, amorphous silicon, conductive polymers, fluoride compounds, phosphates or nitrides;
   (2) the coating layer has a thickness of 5 nm to 200 nm;
   (3) a mass proportion of the coating layer in the anode material is less than or equal to 10%.

6. The anode material of claim 1, wherein the carbon matrix satisfies at least one of the following conditions:

   (1) the carbon matrix has a specific surface area of 800 $m^2$/g to 3000 $m^2$/g;
   (2) the carbon matrix has a specific pore volume of 0.5 $cm^3$/g to 2.0 $cm^3$/g;
   (3) the carbon matrix has a porosity of 40% to 80%;
   (4) the carbon matrix includes one or more of hard carbon, soft carbon, natural graphite, artificial graphite, carbon nanotubes, carbon fibers, or graphene.

7. The anode material of claim 1, wherein the active substance satisfies at least one of the following conditions:

   (1) the active substance includes one or more of Li, Na, K, Sn, Ge, Si, Fe, Mg, SiO, Ti, Zn, Al, P or Cu;
   (2) the active substance includes a silicon material including one or more of amorphous silicon, crystalline silicon, or a compound of crystalline silicon and amorphous silicon;
   (3) the active substance includes a silicon material including one or more of silicon element, silicon oxides or silicon alloys;

(4) the active substance includes a silicon material including silicon particles and a silicon oxide layer on surfaces of the silicon particles, and the silicon oxide layer includes a silicon oxide;

(5) the active substance includes a silicon material having an average particle size of 0.1 nm to 500 nm.

8. The anode material of claim 5, wherein the active substance includes a silicon material, the coating layer includes a carbon material, and the anode material satisfies at least one of the following conditions:

(1) based on the mass of the anode material, a mass proportion of carbon in the anode material is 40% to 60%;

(2) based on the mass of the anode material, a mass proportion of silicon in the anode material is 30% to 65% ;

(3) the average particle size of the silicon material is 0.1 nm to 500 nm.

9. The anode material of claim 1, wherein the anode material further satisfies at least one of the following conditions:

(1) the anode material has a specific surface area of 0.5 $m^2$/g to 10 $m^2$/g;

(2) the anode material has a powder conductivity of 0.5 S/cm to 3 S/cm;

(3) the anode material has a 24-hour gas production value of less than or equal to 4 cc/(kg·day).

10. The anode material of claim 1, wherein the anode material further satisfies at least one of the following conditions:

(1) the anode material has a median particle size of 5 $\mu$m to 20 $\mu$m;

(2) the anode material has a particle size distribution (D90-D10)/D50 of 0.9 to 5;

(3) the anode material has a compaction density of 0.8 g/$cm^3$ to 1.3 g/$cm^3$ at a pressure of 1T;

(4) the anode material has a tap density of 0.5 g/$cm^3$ to 1.5 g/$cm^3$ after 3000 times of vibration.

11. An anode sheet, containing an anode current collector and an anode active material layer on the anode current collector, wherein the anode active material layer includes the anode material of any one of claims 1 to 10.

12. A secondary battery containing the anode sheet of claim 11.

**FIG. 1**

**FIG.2**

**FIG.3**

**FIG.4**

**FIG.5**